Europäisches Patentamt

(19) European Patent Office

Office européen des brevets

(11) Publication number: **0 057 035**
**B1**

(12) **EUROPEAN PATENT SPECIFICATION**

(45) Date of publication of patent specification: **09.01.85**

(51) Int. Cl.⁴: **A 01 N 55/04, A 01 N 25/02**

(21) Application number: **82200052.7**

(22) Date of filing: **15.01.82**

(54) **Liquid biocidal formulation, a process for preparing such a formulation, and the use of such a formulation.**

(30) Priority: **28.01.81 GB 8102559**

(43) Date of publication of application:
**04.08.82 Bulletin 82/31**

(45) Publication of the grant of the patent:
**09.01.85 Bulletin 85/02**

(84) Designated Contracting States:
**AT BE CH DE FR IT LI LU NL**

(56) References cited:
**GB-A- 838 722**
**US-A-3 222 158**
**US-A-3 264 177**

(73) Proprietor: **SHELL INTERNATIONALE
RESEARCH MAATSCHAPPIJ B.V.
Carel van Bylandtlaan 30
NL-2596 HR Den Haag (NL)**

(72) Inventor: **Grimsey, John
112 College Road
Sittingbourne Kent (GB)**

(74) Representative: **Hunter, Keith Roger Ian et al
4 York Road
London SE1 7NA (GB)**

Courier Press, Leamington Spa, England.

**0 057 035**

### Description

This invention relates to a liquid biocidal formulation based on a biocidal organotin compound, to a process for preparing such a formulation, and to the use of such formulations in combating pests.

Organotin biocides of various types have been known for many years and examples are described in UK Patent Specifications Nos. 1,327,336, 1,369,147 and 1,369,148 and US Patents Nos. 3,264,177 and 3,389,048. One area in which organotin biocides have found particular utility is in combating acarids and in particular, tricyclohexyl tin derivatives and trineophyl tin derivatives are useful acaricides, commercial examples being cyhexatin (tricyclohexyl tin hydroxide), sold by Dow Chemical Company under the trade mark "Plictran", and fenbutatin oxide (bis[tris(2-methyl-2-phenylpropyl)tin]oxide), sold by "Shell" companies under the trade marks "Vendex" (USA only) and "Torque" (outside USA).

At ambient temperatures such organotin biocides have low solubility in water and alkanols and in most organic solvents which are suitable for use in agrochemical formulations. The preparation therefore of concentrated liquid formulations, for example, emulsifiable concentrates, has not generally proved possible, and this has been so despite the many attempts over a long period (see Japanese Patent No. 44-23996), stimulated by the fact that emulsifiable concentrate formulations generally have advantages over wettable powders and suspension concentrates; for example they may be more simply prepared using technically less sophisticated facilities and they allow more ready attainment of fine dispersions in water for application to a treatment site. Thus these organotin biocides have hitherto been available only in the form of wettable powders and suspension concentrates (see Pesticides Manual, 6th Ed., British Crop Protection Council).

It has now surprisingly been discovered that comparatively high concentrations of certain biocidal organotin compounds may be dissolved in an alcohol at temperatures of at least 50°C to give solutions which remain stable on cooling and that such solutions (containing surfactants) may readily be diluted with water to form dispersions. It has also been found that concentrate formulations based on a water-immiscible liquid containing such comparatively high concentrations of biocidal organotin compound may be prepared using a water-immiscible non-alcoholic organic liquid as carrier in conjunction with an alcohol to solubilize the organotin compound, and that particularly surprisingly the concentration of organotin compound in such a formulation may considerably exceed the ambient temperature solubility of the organotin compound in the alcohol itself.

Accordingly the present invention provides a concentrate formulation of an acaricidal organotin compound characterised in that it is a water dispersible liquid formulation comprising from 2.5 to 50% w/v of at least one emulsifier, at least one saturated or unsaturated mono- or di-hydric alcohol optionally substituted by one or more alkoxy, alkoxyalkoxy, alkoxycarbonyl, alkylcarbonyl, alkylcarbonyloxy or aryl groups present in an amount up to 80% w/v and dissolved therein from 10 to 50% w/v of tricyclohexyl tin or trineophyl tin oxide or hydroxide.

Throughout this Specification and claims, the term "neophyl" is used to indicate "2-methyl-2-phenylpropyl".

The formulations of the present invention may be prepared by a process which comprises forming a solution of an organotin compound by mixing 10 to 50% w/v of trineophyl tin or tricyclohexyl tin oxide or hydroxide, 2.5 to 50% w/v of at least one emulsifier and at least one alcohol as defined above in an amount up to 80% with dissolution of the organotin compound by heating to at least 50°C in the presence of at least part of the alcohol.

The most preferred organotin compounds for use in the formulations according to the invention are cyhexatin and particularly fenbutatin oxide. Conveniently the organotin compound forms from 15 to 40% w/v of the constituents of the formulation.

The optionally substituted saturated or unsaturated mono- or dihydric alcohol or alcohols conveniently contain up to 18 carbon atoms. The alcohol may be a straight-chain or branched or alicyclic compound and any optional substituent containing an alkyl or alkylene group may also be straight-chain or branched. Preferably an alkyl or alkylene group in an optional substituent contains 1 to 6 carbon atoms. Preferred aryl substituents are phenyl groups optionally substituted by one or more moieties independently selected from halogen, preferably chlorine or bromine, atoms, alkyl, preferably methyl and alkoxy, preferably methoxy, groups. Examples of monohydric alcohols include $C_{1-8}$ alkanols, such as methanol, isobutanol and n-octanol. Examples of alicyclic alcohols are cyclopentanol and cyclohexanol. Examples of unsaturated alcohols include monoolefinically unsaturated alcohols such as oleyl alcohol. Examples of dihydric alcohols include $C_{1-6}$ glycols, such as ethylene glycol and hexylene glycol (i.e. tetramethylethylene glycol). It will be appreciated by those skilled in the art that an alcohol defined as a monohydric alcohol substituted by an alkylcarbonyloxy group is a partially esterified glycol. Alkoxy-substituted alcohols include, for example, 2-methoxyethanol, 1-methoxy-2-propanol and 2-n-butoxyethanol. Alkyl carbonyl-substituted alcohols include, for example, hydroxyacetone and diacetone alcohol. Alkoxycarbonyl-substituted alcohols include for example, ethyl lactate. Alkoxyalkoxy-substituted alcohols include, for example, diethylene glycol monoethyl ether. Aryl-substituted alcohols include, for example, benzyl alcohol.

The most preferred alcohols are alkanols, alkoxyalkanols, alkoxycarbonylalkanols and alkoxyalkoxy

2

alkanols containing a total of 3 to 6 carbon atoms, advantageously isobutanol, 2-methoxyethanol, 1-methoxy-2-propanol, 2-n-butoxyethanol, ethyl lactate or diethylene glycol monoethyl ether; and ethylene glycol.

In concentrate formulations based on cyhexatin it has been found that alkoxycarbonyl substituted alcohols, such as alkyl alpha-hydroxycarboxylates, for example ethyl lactate, give very good results.

The concentration of the alcohol or alcohols in the formulation depends to some extent on the amount of biocidal organotin compound used, since for larger quantities of organotin compound, larger amounts of alcohol are naturally required to achieve acceptable dissolution. In general a proportion of alcohol in excess of one mole per mole is used, and preferably in excess of two moles per mole of biocidal organotin compound. Generally the alcohol content is up to 50% w/v and preferably the alcohol or alcohols form not more than 40% w/v of the constituents of the formulation.

Preferably the concentrate formulations of the present invention, especially when for use on crops, also include a water-immiscible non-alcoholic organic liquid which performs a carrier function. It has now been found that it is possible to prepare concentrate formulations containing comparatively high concentrations of organotin compound and including such an organic liquid when an alcohol is used to solubilize the organotin compound and furthermore that low amounts of alcohol may conveniently be used. The organic liquid may be a single component (e.g. xylene) or a blend of components. It is important that the organic liquid should be fully miscible with the particular alcohol or alcohols used, and it should be compatible with the intended use of the formulation e.g. when the formulation is intended for use in protecting crops against acarid pests the organic liquid should be non-phytotoxic. Preferably the organic liquid is a relatively high-boiling liquid (e.g. boiling point at atmospheric pressure above 130°C) and it may be aromatic or non-aromatic, for example paraffinic, a refined mineral oil or a refined vegetable oil. Examples of suitable organic liquids are xylene, the solvents sold under the Shellsol trade mark (e.g. Shellsol A, Shellsol AB and Shellsol T), and the oils known as XHVI 5.7, HVI 55, and Risella D15 oil (trade mark).

Since, when included, the organic liquid performs the function of a miscible carrier, it forms the balance of the formulation after the other ingredients have been accounted for.

The concentrates according to the present invention also contain from 2.5 to 50% w/v of at least one emulsifier to ensure dispersion in water. In concentrates not containing a water-immiscible non-alcoholic organic liquid the emulsifier content is preferably at least 10%, particularly above 20%. It has been found that concentrate formulations of fenbutatin oxide in an alcohol with from 30 to 50% emulsifier content form water clear dispersions in water.

When the concentrates according to the present invention also include a water-immiscible non-alcoholic organic liquid, and particularly for application to crops, the emulsifier content is preferably up to 20% w/v. The preferred concentration of emulsifiers in the formulation is 5 to 15% w/v, advantageously 7 to 12% w/v and conveniently substantially 10% w/v.

Non-ionic, anionic and cationic emulsifiers may be employed, and usually a blend of two or more emulsifiers is advantageous. Mixtures of non-ionic and anionic emulsifiers have been found to be particularly advantageous. Suitable emulsifiers will be readily apparent to those skilled in the art. Non-ionic emulsifiers include polyalkylene glycol ethers and condensation products of alkylphenols, aliphatic alcohols, aliphatic amines or fatty acids with ethylene oxide, propylene oxide or mixtures of ethylene and propylene oxides. Anionic emulsifiers include alkali metal and ammonium salts of fatty acids, of partial esters of diacids, or of condensates of alcohols with sulphuric acid (e.g. alkane sulphonates, alkyl phenol ether sulphonates and alkylbenzene sulphonates). Cationic emulsifiers include quaternary ammonium compounds and fatty amines.

Advantageous mixtures of emulsifiers include mixtures of anionic such as phenyl or benzyl sulphonate salts with non-ionic emulsifiers such as ethoxylated alcohols, ethoxylated vegetable oils, particularly ethoxylated fatty alcohols and ethoxylated castor oil, for example blends of Emulsogen M (Trade mark) and Emulsogen IT (trade mark) (ex Hoechst AG), and blends of Atlox G1281 (trade mark) or Atlox G1282 (trade mark) (et Atlas Chemical Company) with phenyl sulphonate CA.

The concentrate formulation of the invention may additionally include up to 10% w/v of a carboxylic acid. Suitable such acids include for example $C_{2-6}$ alkanoic and $C_{2-6}$ hydroxyalkanoic acids such as propionic acid and lactic acid. Use of such acids has been found to further improve solubilization of the organotin compound. Thus, for example, in a concentrate formulation based on cyhexatin solubilized with an unsubstituted alkanol, for example isobutanol, a carboxylic acid, such as a hydroxyalkanoic acid, particularly an alphahydroxy alkanoic acid such as lactic acid, is preferably included.

The concentrate formulation of the invention may additionally comprise up to 20% w/v of one or more stabiliser, penetrants and/or corrosion inhibitors, and/or up to 20% w/v of one or more other compounds possessing pesticidal, herbicidal, fungicidal or attractant properties, for example pyrethroid insecticides such as cypermethrin, permethrin or fenvalerate.

In the process of the present invention, dissolution of the biocidal organotin compound is achieved by heating to at least 50°C, especially 60°C, more advantageously at least 70°C, and in the preferred embodiment of the invention, substantially 80°C. The upper limit on temperature for dissolution is set by the boiling temperature of the alcohol.

The sequence of mixing does not seem to be important. Thus the biocidal organotin compound may be dissolved directly in part or all of the alcohol before mixing with the remaining components of the formulation, or the alcohol may be mixed with part or all of one or more of the other components of the formulation before dissolution of the biocidal organotin compound.

Further in accordance with the invention there is provided a method of combating pests at a locus which comprises applying to the locus a dispersion in water of such a liquid biocidal formulation.

The invention will be better understood from the following illustrative Examples thereof.

Example 1

A liquid biocidal formulation was prepared from the following components:

| technical fenbutatin oxide | 150 g |
|---|---|
| Risella D15 oil (trade mark) (miscible carrier) | 375 g |
| Emulsogen M (trade mark) (emulsifier) | 50 g |
| Emulsogen IT (trade mark) (emulsifier) | 50 g |
| isobutanol | 281 g (i.e. to 1 litre) |

The miscible carrier, most of the isobutanol and the emulsifiers were stirred together and heated to 80°C in a reaction vessel. The fenbutatin oxide was added and stirring was continued at 80°C until dissolution was complete (about 10 to 15 minutes). Stirring was maintained for a further five minutes. The resulting solution was then allowed to cool to ambient temperature, was made up to 1 litre by addition of the remaining isobutanol and was filtered, yielding the desired formulation in the form of a colourless homogeneous liquid which remained homogeneous at ambient temperature (20°C) and at 10°C and which dispersed readily in water to give a homogeneous emulsion.

Examples 2 to 10

Further formulations were prepared in litre quantities by the method of Example 1 according to the following general compositions:—

| technical fenbutatin oxide | 150 g |
|---|---|
| miscible carrier | 375 g |
| Emulsogen M (trade mark) (emulsifier) | 50 g |
| Emulsogen IT (trade mark) (emulsifier) | 50 g |
| alcohol component | (to 1 litre) |

The nature of the miscible carrier and of the alcohol component and the amount of the alcohol component in each case were as follows:

| Example | Miscible carrier | Alcohol | Weight of alcohol (g) |
|---|---|---|---|
| 2 | Shellsol A (trade mark) | methanol | 277 |
| 3 | Shellsol A | ethyl lactate | 359 |
| 4 | Risella D15 | n-octanol | 287 |
| 5 | Risella D15 | oleyl alcohol | 295 |
| 6 | Shellsol A | butan-2-ol | 277 |
| 7 | Shellsol A | 2-n-butoxyethanol | 316 |
| 8 | Shellsol A | 1-methoxy-2-propanol | 313 |
| 9 | Shellsol A | hexylene glycol | 323 |
| 10 | Shellsol A | benzyl alcohol | 363 |
| 11 | Shellsol A | 2-methoxyethanol | 336 |
| 12 | Shellsol A | 2-ethoxyethanol | 315 |
| 13 | Shellsol A | 2-isopropoxyethanol | 310 |

Each of the formulations 2 to 13 were in the form of colourless homogeneous liquids, which remained homogeneous at ambient temperature (20°C) and dispersed readily in water to give homogeneous emulsions.

Examples 14 to 20

Liquid biocidal formulations were prepared containing varying proportions of isobutanol as alcohol component and having the following general composition:

| | |
|---|---|
| technical fenbutatin oxide | 150 g |
| isobutanol | X g |
| Emulsogen M (trade mark) (emulsifier) | 50 g |
| Emulsogen IT (trade mark) (emulsifier) | 50 g |
| Risella D15 oil (trade mark) (miscible carrier) | to 1 litre |

In each case, the isobutanol, the emulsifiers and most of the miscible carrier were stirred together and heated to 80°C in a reaction vessel. The fenbutatin oxide was added and stirring was continued at 80°C until dissolution was complete (about 10 to 15 minutes). Stirring was maintained for a further five minutes. The resulting solution was then allowed to cool to ambient temperature, was made up to 1 litre by addition of further amounts of the miscible carrier and was filtered. The amount of isobutanol used in each example (Xg) was as follows:

| Example | 14 | 15 | 16 | 17 | 18 | 19 | 20 |
|---|---|---|---|---|---|---|---|
| X(g) | 125 | 151 | 177 | 203 | 229 | 255 | 281 |

The resulting formulations 14 to 20 were in the form of colourless homogeneous liquids which remained homogeneous at ambient temperature (20°C). Formulations 15 to 20 also remained homogeneous at 10°C, and the formulations all dispersed readily when added to water to give homogeneous emulsions.

Examples 21 to 31

Liquid biocidal compositions containing varying proportions of isobutanol as alcohol component and having the following general composition were prepared by the method of Examples 14 to 20:

| technical fenbutatin oxide | 150 g |
|---|---|
| isobutanol | X g |
| Emulsogen M (trade mark) (emulsifier) | 50 g |
| Emulsogen IT (trade mark) (emulsifier) | 50 g |
| Shellsol A (trade mark) (miscible carrier) | to 1 litre |

The amount of isobutanol used in each example (Xg) was as follows:

| Example | 21 | 22 | 23 | 24 | 25 | 26 | 27 | 28 | 29 | 30 | 31 |
|---|---|---|---|---|---|---|---|---|---|---|---|
| X(g) | 26 | 47 | 74 | 99 | 126 | 153 | 179 | 205 | 231 | 258 | 284 |

The resulting formulations 21 to 31 were in form of colourless homogeneous liquids which remained homogeneous at ambient temperature (20°C) and at 10°C, and dispersed readily in water to give a homogeneous emulsions.

Examples 32 to 40

Liquid biocidal formulations containing different alcohol components which were present in the formulations in amounts such that the molar ratios of alcohol to fenbutatin oxide were substantially 2:1, were prepared by the method of Examples 14 to 20. The formulations had the following general composition:

| technical fenbutatin oxide | 150 g |
|---|---|
| alcohol | X G |
| Emulsogen M | 50 g |
| Emulsogen IT | 50 g |
| Shellsol A | to 1 litre |

The alcohols used and their amounts were as follows:

| Example | Alcohol | X (g) |
|---|---|---|
| 32 | ethyl lactate | 33.5 |
| 33 | oleyl alcohol | 75.2 |
| 34 | 2-methoxyethanol | 21.2 |
| 35 | 2-n-butoxyethanol | 33.5 |
| 36 | diethylene glycol monoethyl ether | 37.5 |
| 37 | hydroxyacetone | 21.0 |
| 38 | methanol | 9.12 |
| 39 | isobutanol | 21 |
| 40 | monoethylene glycol | 17.3 |
| 41 | 2-ethoxyethanol | 25.6 |
| 42 | 2-isopropoxyethanol | 29.5 |

6

The resulting formulations were in the form of colourless homogeneous liquids which remained homogeneous at ambient temperature (20°C) and dispersed readily in water to give homogeneous emulsions.

Examples 43 to 45

Liquid biocidal formulations containing varying amounts of fenbutatin oxide were prepared by the method of Examples 14 to 20. The formulations had the following general composition:

| | |
|---|---|
| technical fenbutatin oxide | Y g |
| isobutanol | X g |
| Emulsogen M | 50 g |
| Emulsogen IT | 50 g |
| Shellsol A | to 1 litre |

The amounts of fenbutatin oxide and isobutanol used were as follows:

| Example | Fenbutatin oxide (Y g) | Isobutanol (Xg) |
|---|---|---|
| 43 | 150 | 59 |
| 44 | 200 | 78.7 |
| 45 | 250 | 98.4 |

The resulting formulations were colourless homogeneous liquids which remained homogeneous at ambient temperature (20°C) and dispersed readily in water to give homogeneous emulsions.

Examples 46 to 51

Further liquid biocidal formulations containing an organic acid (lactic acid) component and varying amounts of fenbutatin oxide were prepared according to the method of Examples 14 to 20, the acid component being stirred in with the isobutanol, the emulsifiers and solvent, prior to addition of the fenbutatin oxide. The formulations had the following general composition:

| | |
|---|---|
| technical fenbutatin oxide | Y G |
| isobutanol | X g |
| lactic acid | Z g |
| Emulsogen M | 50 g |
| Emulsogen IT | 50 g |
| Shellsol A | to 1 litre |

The amounts of fenbutatin oxide, isobutanol and lactic acid used were as follows:

**0 057 035**

| Example | Fenbutatin oxide (Yg) | Isobutanol (Xg) | Lactic acid (Zg) |
|---|---|---|---|
| 46 | 150 | 21.6 | 12.8 |
| 47 | 200 | 28.1 | 17.1 |
| 48 | 250 | 35.1 | 21.4 |
| 49 | 300 | 42.1 | 25.6 |
| 50 | 350 | 49.2 | 29.9 |
| 51 | 400 | 56.2 | 34.1 |

The resulting formulations were colourless homogeneous liquids which remained homogeneous at ambient temperature (20°C) are dispersed readily in water to give homogeneous emulsions.

Example 52 to 57

Additional liquid biocidal formulations containing various alcohol components and organic acid components (the molar ratio organic acid:fenbutatin oxide being substantially 1:1) were prepared according to the method used in Examples 46 to 51. The formulations had the following general composition:

| | |
|---|---|
| technical fenbutatin oxide | 150 g |
| alcohol | X g |
| organic acid | Z g |
| Emulsogen M | 50 g |
| Emulsogen IT | 50 g |
| Shellsol A | to 1 litre |

The natures of the alcohols and organic acids, and their amounts, were as follows:

| Example | Alcohol | X(g) | Organic Acid | Z(g) |
|---|---|---|---|---|
| 52 | cyclohexanol | 28 | lactic acid | 12.6 |
| 53 | isobutanol | 10.6 | lactic acid | 12.6 |
| 54 | diacetone alcohol | 32.9 | lactic acid | 12.6 |
| 55 | isobutanol | 10.6 | acetic acid | 8.52 |
| 56 | isobutanol | 10.6 | oleic acid | 40.11 |
| 57 | methanol | 4.55 | lactic acid | 12.6 |

The resulting formulations were colourless homogeneous liquids which remained homogeneous at ambient temperature (20°C) (observed for 4 days) and dispersed readily in water to give homogeneous emulsions.

Example 58

A further formulation was prepared by the method described in Example 1 having the following composition:

8

# 0 057 035

| technical fenbutatin oxide | 150 g |
| Shellsol A (miscible carrier) | 200 g |
| HVI 55 (miscible carrier) | 100 g |
| Emulsogen EL (trade mark) (Emulsifier) | 200 g |
| Emulsogen N 090 (trade mark) (Emulsifier) | 200 g |
| Isobutanol | to 1 litre |

This formulation formed a colourless homogeneous solution which remained homogeneous at 20°C, and dispersed readily in water to give a homogeneous emulsion.

Examples 59—63

Liquid biocidal formulations containing different organic liquids and emulsifiers were prepared by the method described in Example 1. The compositions each included 150 g/litre technical fenbutatin oxide and were made up to 1 litre with isobutanol. The additional components of the formulations were as follows:

Example 59

| Shellsol T (trade mark) (Miscible carrier) | 375 g |
| Emulsogen IC (trade mark) (Emulsifier) | 40 g |
| Emulsogen IT (trade mark) (Emulsifier) | 60 g |

Example 60

| XHVI 5.7 Oil (Miscible carrier) | 375 g |
| Emulsogen MS 12 (trade mark) (Emulsifier) | 50 g |
| Emulsogen LP (trade mark) (Emulsifier) | 50 g |

Example 61

| HVI 55 Oil (Miscible carrier) | 375 g |
| Emulsogen M (trade mark) (Emulsifier) | 80 g |
| Emulsogen IT (trade mark) (Emulsifier) | 20 g |

Example 62

| Shellsol AB (trade mark) (Miscible carrier) | 375 g |
| Emulsogen IC (trade mark) (Emulsifier) | 100 g |

Example 63

| Xylene (Miscible carrier) | 375 g |
| Emulsogen IC (trade mark) (Emulsifier) | 90 g |
| Emulsogen IT (trade mark) (Emulsifier) | 10 g |

Shellsol T, XHVI 5.7 Oil and HVI-55 Oil are highly paraffinic organic liquids derived from processing of crude oil.

Shellsol AB is an aromatic solvent with a boiling range of 186° to 215°C.

In each case the resulting formulations were colourless homogeneous liquids which remained homogeneous at ambient temperature (20°C) and dispersed readily in water to give homogeneous emulsions. Each formulation showed acaricidal activity comparable to that shown by the formulation of Example 1 in test 1 below.

Examples 64—71

Further formulations were prepared, according to the method described in Example 1, without a water-immiscible, non-alcoholic organic liquid, and using different emulsifier contents. The compositions of the formulations are set out in the table below.

9

Amounts given in g/litre

| Example No. | 64 | 65 | 66 | 67 | 68 | 69 | 70 | 71 |
|---|---|---|---|---|---|---|---|---|
| Technical fenbutatin oxide | 150 | 150 | 150 | 150 | 150 | 100 | 100 | 100 |
| Emulsogen EL | 50 | 100 | 150 | 200 | 250 | 150 | 200 | 250 |
| Emulsogen N 090 | 50 | 100 | 150 | 200 | 250 | 150 | 200 | 250 |
| Isobutanol | — to 1 litre — | | — | — | — | — | — | — |

In each case the formulations were colourless homogeneous liquids, remained homogeneous at 20°C, and dispersed readily in water to give homogeneous emulsions (Ex 64 and 65) or water clear emulsions (Ex. 66 to 71).

Example 72—75
Further liquid biocidal formulations were prepared using cyhexatin as organic biocide, instead of fenbutatin oxide. These formulations were prepared by the method described in Example 1 (the acid component where present being stirred in with the miscible carrier and most of the alcohol) with the following compositions.

Example 72

| | |
|---|---|
| Cyhexatin | 150 g |
| Shellsol A (trade mark) (Miscible carrier) | 375 g |
| Emulsogen IC (trade mark) (Emulsifier) | 100 g |
| Ethyl lactate (alcohol component) | to 1 litre |

Example 73

| | |
|---|---|
| Cyhexatin | 150 g |
| Shellsol A (trade mark) (Miscible carrier) | 375 g |
| Emulsogen IC (trade mark) (Emulsifier) | 100 g |
| Lactic Acid | 35 g |
| Isobutanol | to 1 litre. |

Examples 74 and 75 were identical to Examples 72 and 73 except that only 300 g of Shellsol A was used, the deficit being made up by ethyl lactate and isobutanol respectively.

The cyhexatin used in these examples was extracted from "Plictran" (trade mark) wettable powder using dichloromethane and was recrystallised from an alcohol/dichloromethane/water solution.

In each case the formulation formed a colourless homogeneous solution which remained homogeneous at 20°C, and readily dispersed in water to form a homogeneous emulsion.

Example 76
A liquid biocidal formulation was prepared from the same quantities of components as used in Example 1 by dissolving the fenbutatin oxide directly in the isobutanol at 80°C. The solution obtained thereby was cooled to ambient temperature and blended with the emulsifiers and solvent and the resulting solution was filtered, yielding the desired formulation which had properties identical with those of Example 1.

Examples 77 and 78
Liquid biocidal formulations were prepared by the method of Example 1 according to the following general compositions:

| | |
|---|---|
| technical fenbutatin oxide | 200 g |
| Risella D15 oil | 400 g |
| emulsifiers | 100 g |
| isobutanol | 230 g (i.e to 1 litre) |

The nature and proportions of the emulsifiers were as follows:

| Example | 77 | 78 |
|---|---|---|
| Atlox G1281 (trade mark) | 62 | |
| Atlox G1282 (trade mark) | | 54 |
| Phenyl sulphonate CA | 32 | 40 |
| Castor oil 5EO (unsaturated) (ex. Croda Chemical Company) | 6 | 6 |

The resulting formulations were in the form of colourless homogeneous liquids which remained homogeneous at ambient temperature (20°C) and dispersed readily in water to give homogeneous emulsions.

Examples 79 and 80

Liquid formulations were prepared from the same quantities of components used in Example 1, by the same method as that of Example 1 except that dissolution of the fenbutatin oxide was effected at lower temperatures. The temperatures and times for dissolution were as follows:

| Example | Temperature | Time (minutes) |
|---|---|---|
| 79 | 70 | 30 |
| 80 | 60 | 70 |

The utility of the process of the invention, and more particularly of the formulations obtained thereby, will be better understood from the results of the following tests.

Test 1

The liquid biocidal formulation prepared in Example 1 was tested in comparison with a commercial suspension concentrate formulation containing 550 g/l fenbutatin oxide ("Torque") (Registered Trade Mark) against the glasshouse red spider mite, *Tetranychus urticae* Koch, as follows.

The respective formulations were dispersed in water to produce compositions containing various concentrations of fenbutatin oxide. Leaf discs cut from french bean plants were sprayed with the composition and left for $\frac{1}{2}$ to 1 hour drying period. Each leaf disc was then innoculated with 10 red spider mites and mortality counts made 24 hours after innoculation. From these results the $LC_{50}$'s (the lethal concentration in weight percentage of fenbutatin oxide in the compositions required to kill 50% of the mite population) were calculated.

The results are given in Table I

TABLE I

| Formulation | $LC_{50}$ (kg active ingredient/hectare) | | | |
|---|---|---|---|---|
| | Experiment 1 | | Experiment 2 | |
| | 48 hrs | 72 hrs | 48 hrs | 72 hrs |
| Example 1 | 0.0054 | 0.0035 | 0.0042 | 0.0040 |
| 550 g/l commercial suspension concentrate | 0.050 | 0.025 | 0.039 | 0.024 |

It can readily be seen that, compared with the commercial suspension concentrate, the liquid biocidal formulation prepared in Example 1 enabled similar toxic effects to be obtained at much lower concentrations of active ingredient (fenbutatin oxide).

Test 2

Field trials were carried out in order to compare the miticidal efficacy of the liquid biocidal formulation prepared in Example 1 with that of a commercial suspension concentrate formulation containing 550 g/l fenbutation oxide ("Torque") (Registered Trade Mark) against *Panonychus ulmi* on Worcester apple trees.

Two applications were made using a knapsack motorised mist blower at a volume rate of 555 litres/hectare, using aqueous dispersions of the formulations at concentrations of 0.025% and 0.05% w/v fenbutatin oxide. The results are given in Table II.

TABLE II

| Formulation | Spray concentration of fenbutatin oxide (g/100 ml) | Mean % of mites (on 20 leaves) controlled at increasing days after treatment vs untreated controls | | | | | | | | | | | | |
|---|---|---|---|---|---|---|---|---|---|---|---|---|---|---|---|
| | | 3 | 5 | 14 | 21 | 28 | 35 | 41 | 50 | 56 | 63 | (70 days) | 1 | 6 |
| Example 1 | 0.025 | 40 | 87 | 93 | 75 | 87 | 87 | 68 | 69 | 62 | 57 | Resprayed | 74 | 77 |
| | 0.05 | 66 | 91 | 95 | 73 | 89 | 87 | 76 | 77 | 67 | 71 | | 79 | 84 |
| 550 g/l commercial suspension concentrate | 0.025 | 33 | 70 | 75 | 47 | 69 | 76 | 68 | 70 | 59 | 48 | | 59 | 62 |
| | 0.05 | 34 | 76 | 86 | 58 | 75 | 87 | 76 | 78 | 60 | 61 | | 73 | 81 |

0057035

It will be observed that, compared with the commercial suspension concentrate, the liquid biocidal formulation prepared in Example 1 exhibited greater speed of action and also slightly superior longer term residual activity.

## Claims

1. A concentrate formulation of an organotin acaricide characterised in that it is a water dispersible liquid formulation comprising from 2.5 to 50% w/v of at least one emulsifier, at least one saturated or unsaturated mono- or di-hydric alcohol optionally subtituted by one or more alkoxy, alkoxyalkoxy, alkoxycarbonyl, alkylcarbonyl, alkylcarbonyloxy or aryl groups present in an amount up to 80% w/v and dissolved therein from 10 to 50% w/v of tricyclohexyl tin or trineophyl tin oxide or hydroxide.

2. A concentrate according to claim 1 which also comprises a water-immiscible non-alcoholic organic liquid.

3. A concentrate according to claim 1, which contains no water-immisible non-alcoholic liquid, and in which the quantity of emulsifier is above 20% w/v.

4. A concentrate according to claim 2 in which the quantity of emulsifier is up to 20% w/v.

5. A concentrate according to any of the preceding claims in which the organotin compound is cyhexatin or fenbutatin oxide.

6. A concentrate according to any of the preceding claims which also comprises up to 10% w/v of a carboxylic acid.

7. A concentrate according to any of the preceding claims wherein the or each optionally substituted alcohol contains up to 18 carbon atoms.

8. A concentrate according to claim 7 wherein the optionally substituted alcohol is an alkanol, an alkoxyalkanol, an alkoxycarbonylalkanol, or an alkoxyalkoxyalkanol containing a total of 3 to 6 carbon atoms; or is ethylene glycol.

9. A process for preparing a concentrate according to any of the preceding claims which comprises forming a solution of an organotin compound by mixing 10 to 50% w/v of tricyclohexyl tin or trineophyl tin oxide or hydroxide, at least one saturated or unsaturated mono- or di-hydric alcohol optionally substituted by one or more alkoxy, alkoxyalkoxy, alkoxycarbonyl, alkylcarbonyl, alkylcarbonyloxy or aryl groups present in an amount up to 80% w/v and from 2.5 to 50% w/v of at least one emulsifier, with dissolution of the organotin compound by heating to at least 50°C in the presence of at least part of the alcohol.

10. A method of preparing an aqueous dispersion of an organotin compound which comprises dispersing a concentrate according to any of claims 1 to 8 in water.

11. A method of combating pests at a locus which comprises applying to the locus an aqueous dispersion according to claim 10.

## Revendications

1. Une composition concentrée d'un acaricide organoétain, caractérisée en ce que c'est une composition liquide dispersable dans l'eau comprenant de 2,5 à 50% en poids/volume d'au moins un émulsionnant, au moins un alcool mono- ou dihydrique saturé ou non éventuellement substitué par un ou plusieurs groupes alcoxy, alcoxyalcoxy, alcoxycarbonyle, alcoylcarbonyle, alcoylcarbonyloxy ou aryle présent dans une quantité allant jusqu'à 80% en poids/volume et contenant à l'état dissous de 10 à 50% en poids/volume d'oxyde ou d'hydroxyde de tricyclohexylétain ou de trinéophénylétain.

2. Un concentré selon la revendication 1, qui comprend aussi un liquide organique non-alcoolique non-miscible avec l'eau.

3. Un concentré selon la revendication 1, qui ne contient pas de liquide non-alcoolique non-miscible avec l'eau, et dans lequel la quantité d'émulsionnant est supérieure à 20% en poids/volume.

4. Un concentré selon la revendication 2, dans lequel la quantité d'émulsionnant va jusqu'à 20% en poids/volume.

5. Un concentré selon l'une quelconque des revendications précédentes, dans lequel le composé organo-étain est du cyhexatin ou de l'oxyde de fenbutatin.

6. Un concentré selon l'une quelconque des revendications précédentes, qui comprend aussi jusqu'à 10% en poids/volume d'un acide carboxylique.

7. Un concentré selon l'une quelconque des revendications précédentes, dans lequel l'alcool ou chaque alcool éventuellement substitué contient jusqu'à 18 atomes de carbone.

8. Un concentré selon la revendication 7, dans lequel l'alcool éventuellement substitué est un alcanol, un alcoxyalcanol, un alcoxycarbonylalcanol ou un alcoxyalcoxyalcanol contenant un total de 3 à 6 atomes de carbone; ou est de l'éthylène-glycol.

9. Un procédé pour préparer un concentré selon l'une quelconque des revendications précédentes, qui comprend la formation d'une solution d'un composé organo-étain en mélangent 10 à 50% en poids/volume d'oxyde ou d'hydroxyde de tricyclohexylétain ou de trinéophylétain, au moins un alcool mono- ou dihydrique saturé ou non éventuellement substitué par un ou plusieurs groupes alcoxy, alcoxyalcoxy, alcoxycarbonyle, alcoylcarbonyle, alcoylcarbonyloxy ou aryle présent à raison de jusqu'à 80% en pods/volume et de 2,5 à 50% en poids/volume d'au moins un émulsionnant, avec dissolution du composé organo-étain par chauffage à au moins 50°C en présence d'au moins une partie de l'alcool.

10. Un procédé de préparation d'une dispersion aqueuse d'un composé organo-étain, qui comprend la dispersion d'un concentré selon l'une quelconque des revendications 1 à 8 dans de l'eau.

11. Un procédé de lutte contre des organismes nuisibles en un lieu, qui comprend l'application en ce lieu d'une dispersion aqueuse selon la revendication 10.

**Patentansprüche**

1. Eine Konzentrat-Formulierung eines Organozinn-Acarizids, dadurch gekennzeichnet, daß sie eine wasserdispergierbare flüssige Formulierung ist, die von 2,5 bis 50% Gew./Vol. wenigstens eines Emulgators, wenigstens einen gesättigten oder ungesättigten, ein- oder zweiwertigen Alkohol, der gegebenenfalls durch eine oder mehrere Alkoxy-, Alkoxyalkoxy-, Alkoxycarbonyl-, Alkylcarbonyl-, Alkylcarbonyl- oxy- oder Arylgruppen substituiert ist und in einer Menge bis zu 80% Gew./Vol. zugegen ist, und darin gelöst von 10 bis 50% Gew./Vol. Tricyclohexylzinn- oder Trineophylzinnoxid oder -hydroxid enthält.

2. Ein Konzentrat nach Anspruch 1, das zusätzlich eine wasserunmischbare, nichtalkoholische organische Flüssigkeit enthält.

3. Ein Konzentrat nach Anspruch 1, welches keine wasserunmischbare, nichtalkoholische Flüssigkeit enthält und in welcher die Menge an Emulgator über 20% Gew./Vol. beträgt.

4. Ein Konzentrat nach Anspruch 2, worin die Menge an Emulgator bis zu 20% Gew./Vol. beträgt.

5. Ein Konzentrat nach einem der vorstehenden Ansprüche, worin die Organozinn-Verbindung Cyhexatin oder Fenbutatinoxid ist.

6. Ein Konzentrat nach einem der vorstehenden Ansprüche, das zusätzlich bis zu 10% Gew./Vol. einer Carbonsäure enthält.

7. Ein Konzentrat nach einem der vorstehenden Ansprüche, worin der ode jeder gegebenenfalls substituierte Alkohol bis zu 18 Kohlenstoffatome enthält.

8. Ein Konzentrat nach Anspruch 7, worin der gegebenenfalls substituierte Alkohol ein Alkanol, ein Alkoxyalkanol, ein Alkoxycarbonylalkohol oder ein Alkoxyalkoxyalkanol mit insgesamt 3 bis 6 Kohlenstoffatomen oder Ethylenglycol ist.

9. Ein Verfahren zur Herstellung eines Konzentrates nach einem der vorstehenden Ansprüche, umfassend das Ausbilden einer Lösung einer Organozinn-Verbindung durch Vermischen von 10 bis 50% Gew./Vol. Tricyclohexylzinn- oder Trineophylzinnoxid oder -hydroxid, wenigstens einem gesättigten oder ungesättigten ein- oder zweiwertigen Alkohol, der gegebenenfalls durch eine oder mehrere Alkoxy-, Alkoxyalkoxy-, Alkoxycarbonyl-, Alkylcarbonyl-, Alkylcarbonyloxy- oder Arylgruppen substituiert ist und in einer Menge von bis zu 80% Gew./Vol. vorliegt, und von 2,5 bis 50% Gew./Vol. wenigstens eiens Emulgators, mit Auflösen der Organozinn-Verbindung durch Erhitzen auf wenigstens 50°C in Gegenwart von wenigstens einem Teil des Alkohols.

10. Ein Verfahren zur Herstellung einer wässerigen Dispersion einer Organozinn-Verbindung, welches ein Dispergieren eines Konzentrates gemäß einem der Ansprüche 1 bis 8 in Wasser umfaßt.

11. Ein Verfahren zur Bekämpfung von Schädlingen an einem Ort, welches ein Aufbringen einer wässerigen Dispersion gemäß Anspruch 10 auf den Ort umfaßt.